# EUROPEAN PATENT APPLICATION

(11) **EP 3 572 646 A1**
(43) Date of publication of application: **27.11.2019**
(21) Application number: 19175977.8
(22) Date of filing: 22.05.2019
(51) Int. Cl.: F02C 9/26, G06K 7/10

(54) **CALIBRATION SYSTEMS BASED ON ENCODED IMAGES**

(30) Priority: 22.05.2018 US 201815985769
(71) Applicant: Hamilton Sundstrand Corporation, Charlotte, NC 28217-4578 (US)
(72) Inventor: DYER, Gerald P., Suffield, CT Connecticut 06078 (US); REUTER, Charles E., Granby, CT Connecticut 06035 (US)
(74) Representative: Dehns

(57) **Abstract**

An example method of calibrating a controller (200) for controlling or sensing data from a device includes decoding an encoded image (56) depicted on a surface associated with a device to obtain an identifier of the device and calibration data for an output of the device. The calibration data is utilized by a controller for one of controlling and sensing data from the device. An example system for controlling or sensing data from a device is also disclosed.

## Description

### BACKGROUND

This application relates to calibration, and more particularly to a system for providing calibration data for a device to a controller based on an encoded image.

An aircraft electronic engine control (EEC) typically controls devices such as valves and actuators electronically, and relies on sensors for feedback from the controlled devices. Due to manufacturing differences, the EEC may rely on nominal values that generally apply to a given device, but that do not account for the manufacturing differences between similar devices. A given valve position, for example, may have an associated expected output flow rate that could vary between a same model of valve due to manufacturing differences. It is known to store device-specific calibration values for a valve in a memory circuit that is attached to the valve, and to connect that memory circuit to the EEC.

### SUMMARY

An example method of calibrating a controller for controlling or sensing data from a device includes decoding an encoded image depicted on a surface associated with a device to obtain an identifier of the device and calibration data for an output of the device. The calibration data is utilized by a controller for one of controlling and sensing data from the device.

An example system for controlling or sensing data from a device includes a device, where a surface associated with the device depicts an encoded image. A controller is configured to control the device or sense data from the device. An imaging device is in communication with the controller, and is configured to read the encoded image. One of the imaging device and controller is configured to decode the encoded image to obtain an identifier of the device and calibration data for an output of the device. The controller is configured to utilize the calibration data for one of controlling and sensing data from the device.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1 schematically illustrates of an example of a gas turbine engine and an associated system for controlling a flow of fuel to the gas turbine engine.
Figure 2 schematically illustrates an example of a metering valve of Figure 1 in greater detail.
Figure 3 is a graph depicting an example of how an output flow of a metering valve varies based on a position of a valve spool of the metering valve.
Figure 4 schematically illustrates an example of an actuator of Figure 1 in greater detail.
Figure 5 is a graph depicting an example of how an output of a position sensor varies based on a position of an actuator forcer rod.
Figure 6 is a graph depicting an example of how electrical signal values from a flow meter vary based on an actual flow rate the flow meter is configured to measure.
Figure 7 is a graph depicting an example of how electrical signal values from a pressure sensor vary based on an actual pressure the pressure sensor is configured to measure.
Figure 8 is a graph depicting an example of how a regulated pressure of a regulating valve varies based on a rotational speed of a gas turbine engine.
Figure 9 schematically illustrates an example controller.
Figure 10 schematically illustrates an example imaging device.
Figure 11 is a flowchart representative of an example method of calibrating a controller for controlling or sensing data from a device.

### DETAILED DESCRIPTION

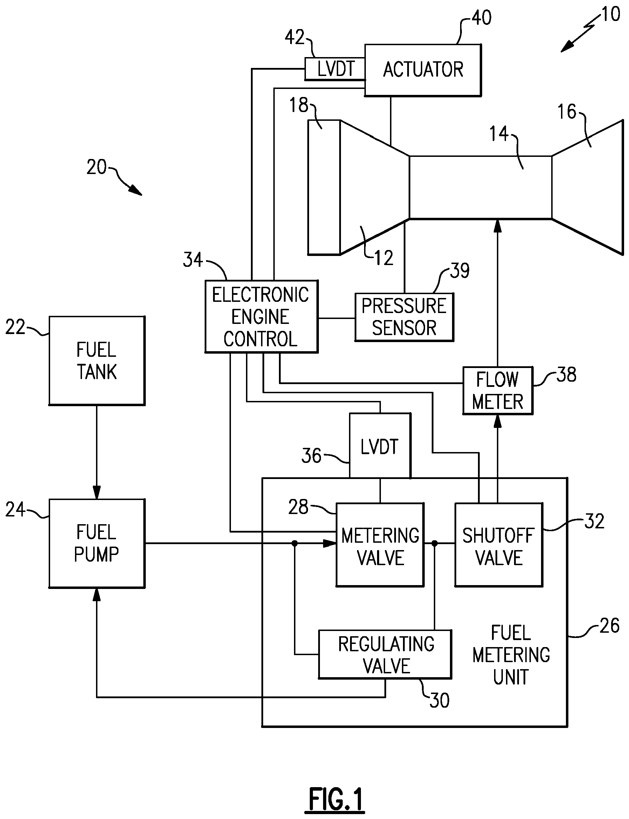

Figure 1 schematically illustrates a gas turbine engine 10 and a fuel delivery system 20 that provides a flow of fuel from a fuel tank 22 to the gas turbine engine 10.

The gas turbine engine 10 includes a compressor section 12 that pressurizes air into a combustion section 14 where the air is mixed with fuel and ignited to generate an exhaust gas flow. The exhaust gas flow expands through a turbine section 16 to drive the compressor section 12 and a fan section 18.

The fuel delivery system 20 provides fuel to the combustor section 14. In particular, the fuel delivery system 20 includes a fuel pump 24 that pumps fuel from the fuel tank 22 to a fuel metering unit 26. An output of the fuel pump 24 is proportional to a rotational speed of the gas turbine engine 10. The fuel metering unit 26 includes a metering valve 28, a regulating valve 30, and a shutoff valve 32.

The metering valve 29 controls a rate at which fuel flows from the fuel pump 24 to the compressor section 14. The regulating valve 30 maintains a pressure drop across the metering valve 28 at an approximately constant value. The shutoff valve 32 is operable to shutoff the flow of fuel from the fuel pump 24 to the combustor section 14.

An electronic engine controller (EEC) 34 is configured to control operation of the metering valve 28 and shutoff valve 32. The EEC 34 utilizes a linear variable differential transformer (LVDT) 36 as a sensor to determine a position of a spool of the metering valve 28.

The EEC 34 also utilizes a flow meter 38 to determine a flow rate of fuel provided by the fuel metering unit 26 to the combustor section 14. The EEC 34 utilizes a pressure sensor 39 to determine an air pressure in the gas turbine engine 10 (e.g., in the compressor section 12).

The EEC also controls an actuator 40 of the gas turbine engine, and determines a position of a movable portion of the actuator 40 using a LVDT 42.

Although not shown in Figure 1, in one example the EEC 34 could include redundant control / sensing lines for that connect to one or more of the devices 28, 32, 36, 38, 39, 40, 42 to the EEC 34 and provide redundant communication channels between the devices and the EEC 34.

As discussed in greater detail below, at least one device controlled by the EEC 34 (e.g., metering valve 28 or actuator 40) or sensor utilized by the EEC 34 (e.g., flow meter 38 or pressure sensor 39) has an associated encoded image depicted on a surface associated with the device that stores calibration data for an output of the device in an encoded format, such as a known two dimensional barcode format (e.g., a Quick Response "QR" code format).

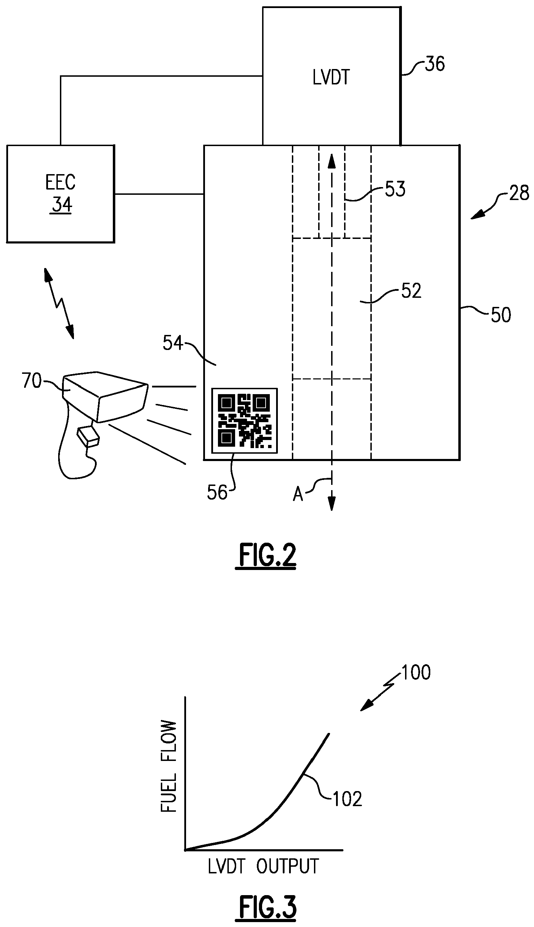

Figure 2 schematically illustrates an example of the metering valve 28 and LVDT 36 in greater detail. The metering valve 28 includes a valve body 50, and a valve spool 52 that is within the valve body 50 and is attached to a valve stem 53. The valve spool 52 and valve stem 53 are movable along a longitudinal axis A to control a flow rate of fuel that flows out of the metering valve 28. LVDT 36 is operable to measure a linear displacement of the valve spool 52 along the longitudinal axis A. The EEC 34 controls movement of the valve spool 52 of the metering valve 28 along the longitudinal axis A. The EEC 34 is in communication with LVDT 36 to determine a position of the valve spool 52.

An encoded image 56 is depicted on a surface associated with the metering valve 28. In the example of Figure 2, the encoded image is depicted on an outer surface 54 of the metering valve 28. As used herein, "encoded image" means an image depicting data in an encoded format, such as a two dimensional barcode. Reference number 56 is used generically to refer to an encoded image for a given device herein.

The encoded image 56 in Figure 2 depicts calibration data in an encoded format that includes one or more calibration values for an output of the metering valve 28. An imaging device 70 (depicted as a scanner in Figure 2), reads the encoded image 56. Either the imaging device 70 or the EEC 34 decodes the encoded image to obtain an identifier of the metering valve 28 and calibration data that is encoded in the encoded image 56. In one example, the calibration data includes a predefined mapping between valve positions of the valve spool 52 and corresponding output flow rates of the metering valve 28 at those valve positions.

In one example, the imaging device 70 reads the image, and transmits the image to the EEC 34 through a wired or wireless connection for decoding. In another example, the imaging device 70 performs the decoding, and transmits the decoded calibration data to the EEC 34 through the wired or wireless connection.

The EEC 34 utilizes the calibration data for controlling the metering valve 28, so that the metering valve 28 can be controlled based on an individual characteristic of the valve (e.g., manufacturing differences) that would otherwise cause slight performance differences between the valve and other valves of the same model. By utilizing the calibration data, the EEC 34 can more accurately control the metering valve 28.

In one example, the EEC 34 utilizes the calibration data to determine a mapping between positions of the valve spool 52 and output flow rates of the metering valve 28. This may include the EEC 34 creating a new mapping, or updating a predefined mapping that uses nominal values.

In one example, the EEC 34 includes predefined nominal valves for a class of metering valves that map predefined valve positions of the valve spool 52 to corresponding output flow rates for a class of metering valve 28 at those valve positions, but those nominal values do not account for manufacturing differences between different metering valves of the class (e.g., model). The EEC 34 is configured to update those nominal values based on the calibration data from the encoded image 56 so that the predefined valve positions of the valve spool 52 are mapped more accurately to output flow rates of the metering valve 28.

In one example, if the EEC 34 lacks such nominal values, the EEC 34 instead creates an initial mapping between positions of the valve spool 52 to particular output flow rates for the metering valve 28 based on the calibration data from the encoded image 56.

Although depicted as a barcode scanner, it is understood that the imaging device 70 could include a camera configured to take a photograph of the encoded image 56 instead of scanning it.

Figure 3 is a graph 100 depicting an example plot 102 of how an output flow of the metering valve 28 varies based on a position of the valve spool 52 (represented as an LVDT output). In one example, the calibration data stored in the encoded image includes a plurality of discrete values from the plot 102. This enables the EEC 34 to more accurately control the output flow rate of the metering valve 28.

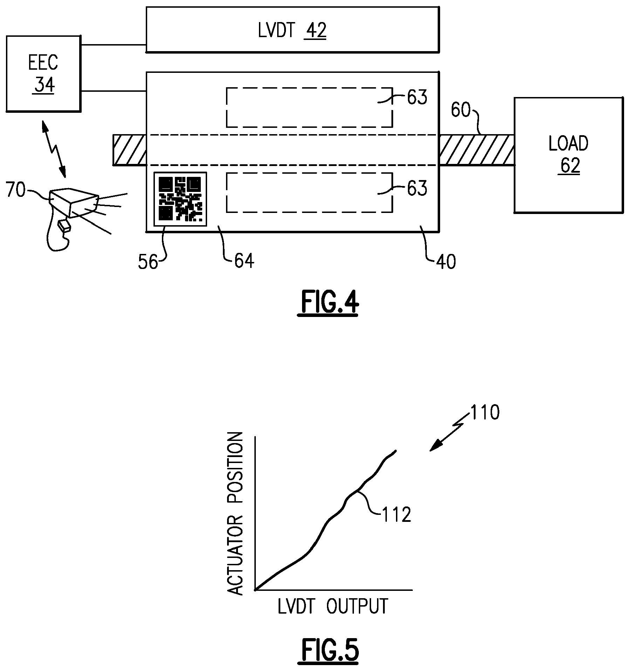

Figure 4 schematically illustrates the actuator 40, which includes a forcer rod 60 that is movable along a longitudinal axis B to actuate a load 62. The EEC 34 controls movement of the forcer rod 60 using a linear motor 63. In one example, the load 62 includes a synchronizing ring ("synch-ring") that is rotatable about a central longitudinal axis of the gas turbine engine 10 to pivot adjustable vanes of the compressor section 12 or turbine section 16. The LVDT 42 is operable to measure a linear displacement of the forcer rod 60 along the longitudinal axis B.

An encoded image 56 is depicted on a surface associated with the actuator 40. In the example of Figure 4, the encoded image 56 is depicted on an outer surface 64 of the actuator 40 itself. Alternatively, the encoded image 56 could be depicted on a surface of the LVDT 42, for example. The encoded image 56 stores calibration data that includes one or more calibration values for calibrating output of the LVDT 42 to actual positions of the actuator 40. An imaging device 70, depicted as a scanner in Figure 4, reads the encoded image 56. Either the imaging device 70 or the EEC 34 decodes the encoded image to obtain an identifier of the actuator 40 and the calibration data that is encoded in the encoded image 56.

The EEC 34 utilizes the calibration data in a similar manner to that described above, by creating or updating a mapping for the actuator 40 based on the calibration data, and then utilizes that mapped calibration data when controlling movement of the forcer rod 60 to achieve greater accuracy in forcer rod 60 positions.

Figure 5 is a graph 110 depicting an example plot 112 of how an output of LVDT 42 varies based on the position of the forcer rod 60. In one example, the calibration data stored in the encoded image 56 includes a plurality of discrete values from the plot 112, which enables the EEC 34 to more accurately control the actuator 40.

In a similar manner, the flow meter 38 and pressure sensor 39 could have an encoded image 56 depicted on a surface associated with those devices (e.g., an exterior surface of the devices themselves).

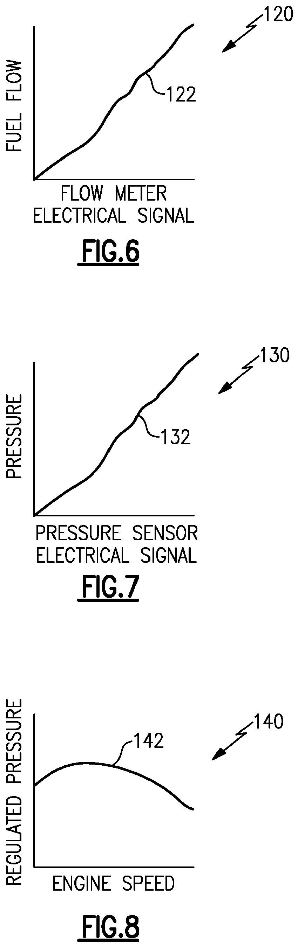

Figure 6 is a graph 120 depicting an example plot 122 of how electrical signal values from flow meter 38 vary based on an actual flow rate the flow meter 38 is configured to measure. In one example, the calibration data stored in the encoded image 56 includes a plurality of discrete values from the plot 122, which enables the EEC 34 to more accurately determine a fuel flow to the gas turbine engine 10.

Figure 7 is a graph 130 depicting an example plot 132 of how electrical signal values from pressure sensor 39 vary based on an actual pressure the pressure sensor 39 is configured to measure. In one example, the calibration data stored in the encoded image 56 includes a plurality of discrete values from the plot 132, which enables the EEC 34 to more accurately determine a pressure of the gas turbine engine 10.

Figure 8 is a graph 140 depicting an example plot 142 of how a regulated pressure of the regulating valve 30 varies based on a rotational speed of the gas turbine engine 10. In one example, the calibration data stored in the encoded image 56 includes a plurality of discrete values from the plot 142, which enables the EEC 34 to more accurately control the metering valve 28, because a fuel flow through the metering valve 28 depends on the pressure drop across the regulating valve 30.

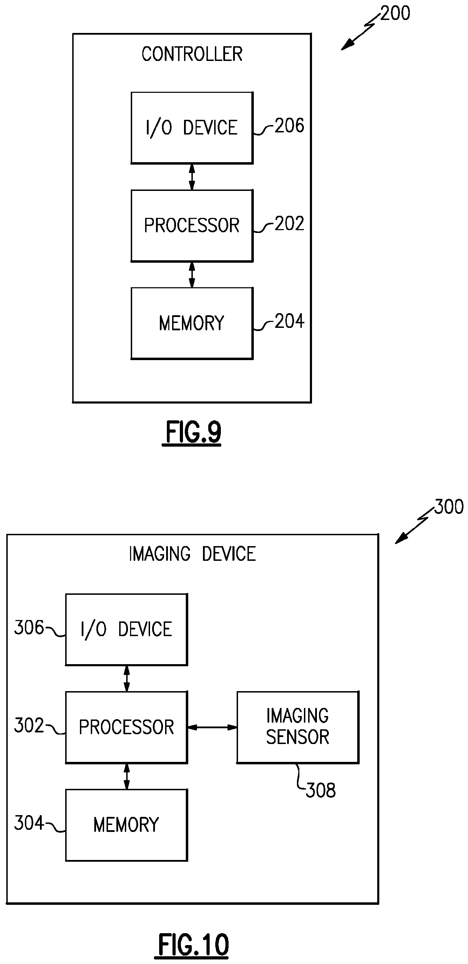

Figure 9 schematically illustrates an example controller 200 that may be used as the EEC 34 of Figure 1. The controller 200 includes a processor 202 that is operatively connected to memory 204 and at least one an input/output ("I/O") device 206. The processor 202 includes one or more microprocessors, microcontrollers, application specific integrated circuits (ASICs), or the like, for example.

The memory 204 includes at least one non-volatile memory element (e.g., ROM, hard drive, tape, CD-ROM, etc.) and may also include at least one volatile memory elements (e.g., random access memory (RAM, such as DRAM, SRAM, SDRAM, VRAM, etc.)). A non-volatile portion of the memory 304 stores calibration data for one or more devices (e.g., metering valve 28 and/or actuator 40). In one example, the memory 204 is part of a Data Storage Unit (DSU) of an aircraft gas turbine engine.

The at least one I/O device 206 is configured to facilitate communication between the controller 200 and other devices, such as the controlled valves 28, 32 and sensors 36, 38, 39, 42. The at least one I/O device 206 is configured to communicate with the imaging device 70 using a wired or wireless interface. In one example, the at least one I/O device 260 includes a wireless transceiver for wirelessly communicating with the imaging device 70.

The processor 202 is configured to sense data from one or more of the sensors 36, 38, 39, 42 to operate one or more of the devices 28, 40, to achieve a desired operation of the gas turbine engine 10. In some examples, the processor 202 is configured to decode an encoded image provided by the imaging device 70.

Figure 10 schematically illustrates an example imaging device 300 that may be used as the imaging device 70 of Figure 2. The imaging device 300 includes a processor 302, memory 304, at least one I/O device 306, and an imaging sensor 308. The processor 302 includes one or more microprocessors, microcontrollers, application specific integrated circuits (ASICs), or the like, for example.

The memory 304 includes at least one non-volatile memory element (e.g., ROM, hard drive, tape, CD-ROM, etc.) and may also include at least one volatile memory elements (e.g., random access memory (RAM, such as DRAM, SRAM, SDRAM, VRAM, etc.)).

The at least one I/O device 306 includes a transceiver configured to communicate with the EEC 34 wirelessly or over a wired connection.

The processor 302 is configured to utilize the imaging sensor 308 to read an encoded image 56 from a device to obtain calibration data for the device. The imaging sensor 308 can include a barcode scanning element or a photographic image sensor, for example. In one example, the processor 302 is operable to decode the encoded images it reads before transmitting them to the controller 200.

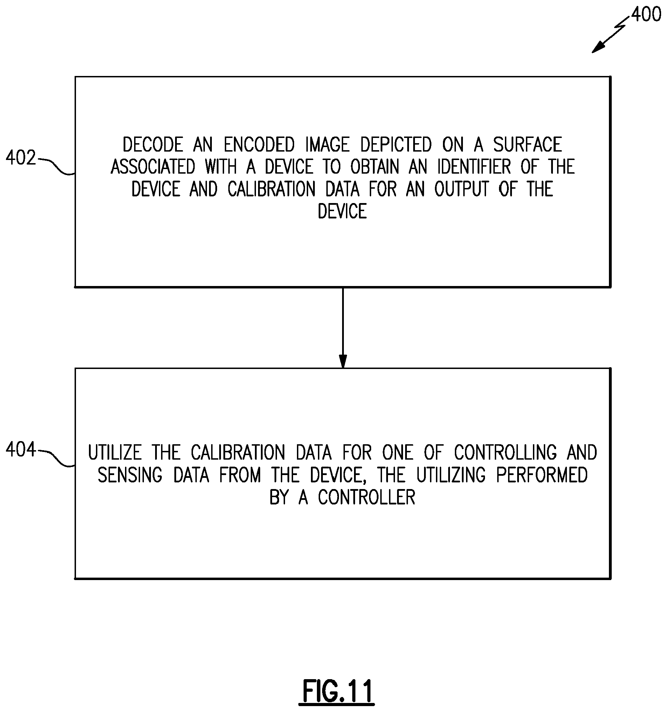

Figure 11 is a flowchart 400 representative of an example method of calibrating a controller (e.g., EEC 34) for controlling or sensing data from a device (e.g., a valve, actuator, or sensor). The method includes decoding an encoded image 56 depicted on a surface associated with the device to obtain an identifier of the device and calibration data for an output of the device (block 402). The controller utilizes the calibration data for one of controlling and sensing data from the device (block 404).

Use of the encoded images 56 provides for efficient updates to the EEC 34 when a part needs to be replaced, because configuration data for that part can be quickly obtained from its encoded image 56 and provided to the EEC 34.

Some prior art systems have included calibration data on a memory element that is mounted to a valve in a fuel metering unit of a gas turbine engine, which subjects the memory element to the harsh operating environment of the engine during use of the engine. The techniques discussed herein are superior because reliance upon such memory elements is not required. Also, wiring that would otherwise be needed to connect a controller to such memory elements can be omitted, thereby improving reliability and reducing weight.

Although particular types of devices are discussed above (e.g., valves, actuators, and sensors), the techniques discussed herein are not limited to those particular devices. Also, although Figure 1 depicts LVDTs 36, 42, it is understood that the techniques discussed herein could also be applied to other types of sensors and other types of VDTs, such as rotary differential transformers (RVDTs).

Although example embodiments have been disclosed, a worker of ordinary skill in this art would recognize that certain modifications would come within the scope of the invention as defined by the claims. For that reason, the following claims should be studied to determine the scope of the invention.

## Claims

1. A method of calibrating a controller (200) for controlling or sensing data from a device, the method comprising:
decoding an encoded image (56) depicted on a surface associated with a device to obtain an identifier of the device and calibration data for an output of the device; and
utilizing the calibration data for one of controlling and sensing data from the device, the utilizing performed by a controller.

2. The method of claim 1, comprising:
reading the encoded image using an imaging device (70), the imaging device comprising a camera or a barcode scanner.

3. The method of claim 2, wherein the encoded image comprises a two dimensional barcode.

4. The method of claim 2 or 3, wherein the imaging device also performs the decoding, and the method comprises:
transmitting the identifier and calibration data from the imaging device to the controller.

5. The method of any preceding claim, wherein the surface associated with the device comprises an exterior surface (64) of the device.

6. The method of any preceding claim, wherein said utilizing comprises adjusting one or more nominal values for controlling or sensing data from a class of devices to which the device belongs based on the calibration data.

7. The method of any preceding claim, wherein the device comprises a valve (28), and said utilizing comprises determining a predefined mapping between valve positions and corresponding output flow rates of the valve at those valve positions based on the calibration data, and preferably wherein the valve positions are represented by variable differential transformer (VDT) output values of a VDT that measures a position of the valve.

8. The method of claim 7, wherein said utilizing comprises controlling a flow rate of fuel through the valve from a source to a combustor of a gas turbine engine.

9. The method of any preceding claim, wherein the device comprises an actuator (40), and said utilizing comprises determining a predefined mapping of sensor values indicative of actuator positions to actual actuator positions based on the calibration data, or wherein the device comprises a sensor (39), and said utilizing comprises determining a predefined mapping of electrical signal values from the sensor to values of a physical property the sensor is configured to measure based on the calibration data.

10. A system for controlling or sensing data from a device, comprising:
a device, a surface associated with the device depicting an encoded image (56);
a controller (200) configured to control the device or sense data from the device; and
an imaging device (70) in communication with the controller, and configured to read the encoded image;
one of the imaging device and controller configured to decode the encoded image to obtain an identifier of the device and calibration data for an output of the device; and
the controller configured to utilize the calibration data for one of controlling and sensing data from the device.

11. The system of claim 10, wherein the encoded image comprises a two dimensional barcode.

12. The system of any preceding claim, wherein to utilize the calibration data, the controller is configured to adjust one or more nominal values for control or sensing data from a class of devices to which the device belongs based on the calibration data.

13. The system of claim 10, 11 or 12, wherein the device comprises a valve (28), and the calibration data comprises a mapping of values indicative of valve positions to corresponding output flow rates of the valve at those valve positions, and preferably wherein the values indicative of valve positions comprise variable differential transformer (VDT) output values.

14. The system of claim 13, wherein the valve is part of a fuel metering device configured to control a flow of fuel from a source to a combustor of a gas turbine engine.

15. The system of any of claims 10 to 14, wherein the device comprises an actuator (40), and the calibration data comprises a mapping of sensor values indicative of actuator positions to actual actuator positions, or wherein the device comprises a sensor (39), and the calibration data comprises a mapping of electrical signal values from the sensor to values of a physical property the sensor is configured to measure.
